# EUROPEAN PATENT SPECIFICATION

(11) **EP 2 776 685 B1**
(45) Date of publication and mention of the grant of the patent: **04.01.2017**
(21) Application number: 12808479.5
(22) Date of filing: 05.11.2012
(51) Int. Cl.: F01K 13/02, F01K 23/06, F01K 23/10

(54) **METHOD OF CONTROLLING A COMBINED-CYCLE PLANT FOR PRODUCTION OF ELECTRIC ENERGY AND COMBINED-CYCLE PLANT FOR PRODUCTION OF ELECTRIC ENERGY**
VERFAHREN ZUR STEUERUNG EINES KOMBIKRAFTWERKS ZUR ERZEUGUNG ELEKTRISCHER ENERGIE UND KOMBIKRAFTWERK ZUR ERZEUGUNG ELEKTRISCHER ENERGIE
PROCÉDÉ DE COMMANDE D'UNE CENTRALE À CYCLE COMBINÉ POUR LA PRODUCTION D'ÉNERGIE ÉLECTRIQUE ET CENTRALE À CYCLE COMBINÉ POUR LA PRODUCTION D'ÉNERGIE ÉLECTRIQUE

(30) Priority: 04.11.2011 IT MI20112010
(43) Date of publication of application: 17.09.2014
(73) Proprietor: Ansaldo Energia S.p.A., Genova (IT)
(72) Inventor: REPETTO, Enrico, 16149 Genova (IT); FERRUA, Stefano, 16152 Genova (IT); GRUPPI, Pietro, 16146 Genova (IT); NAHUM, Corrado, 16145 Genova (IT)
(74) Representative: Bernotti, Andrea
(86) International application number: PCT/IB2012/056166
(87) International publication number: WO 2013/065031

(56) References cited:
- GB-A- 2 166 198
- US-A- 4 081 956
- US-A- 5 301 499
- US-A1- 2004 088 966

## Description

### TECHNICAL FIELD

The present invention relates to a method of controlling a combined-cycle plant for production of electric energy and to a combined-cycle plant for the production of electric energy.

### BACKGROUND ART

As known, in combined-cycle plants for production of electric energy, the load is distributed between steam turbine and gas turbine (or turbines) by a plant controller which takes network requests, scheduled programming (daily, weekly and seasonal) and the constraints set by regulations in force into account. The plant controller receives a request from the outside and generates an overall active electric load set-point for the plant, which is then distributed between steam turbine and gas turbine (for the sake of simplicity, reference will be made hereinafter to a 1+1 type plant, i.e. one steam turbine and one gas turbine, without thereby loosing in generality).

In order to distribute the load, the plant controller normally subtracts a measure of the active electric power produced by the generator coupled to the steam turbine from the overall electric load set-point. The load value thus obtained is assigned as load set-point of the gas turbine, which is governed by a closed loop load controller. The steam turbine is instead controlled by a pressure regulator, which works on the inlet valves (in particular, on the steam turbine high pressure section) according to sliding-pressure set-point curve. In practice, the contribution of the steam turbine varies by effect of the operating conditions set for the gas turbine (which determines the steam flow rate available to the steam turbine) and is additionally influenced by the action of the pressure regulator.

This type of control allows to obtain thermodynamic (pressure and temperature) conditions of the steam produced by the boiler that ensure maximum efficiency. Such a control is not however sufficiently flexible to adequately meet the requests of the energy market and to environmental standards and network codes. In modern networks daily start-up (morning) and shut-down (evening) cycles and wide, fast load variations are inevitable; furthermore, suppliers must take part in primary grid frequency control to maintain the frequency of the entire electric network stable. An autonomous response capacity of the steam turbine in terms of load is therefore increasingly more necessary to support the gas turbine when excessively fast load variations are needed and to maintain the overall load control of the plant also during start-up and shut-down phases.

US 2004/088966 A1 discloses a cogeneration plant comprising a gas turbine assembly, a supplementary combustion boiler provided in the exhaust stream of the gas turbine and a steam turbine connected to the supplementary combustion boiler to receive steam. A gas turbine controller regulates a fuel injection valve of the gas turbine and a duct burner controller regulates the fuel injection of the supplementary combustion boiler. The supplementary combustion boiler evaporates water using heat from the gas turbine gases and additionally uses a burner to achieve a sufficient heating of the vapor. The cogeneration plant is controlled using a plant load set-point, which is set by the operator of the plant. A provisional load set-point for the steam turbine is determined. The gas turbine controller determines a gas turbine assembly set-point based on the plant load set-point and uses the gas turbine set-point to control the gas turbine assembly. A load error of the gas turbine assembly is determined and is used for correcting a gas turbine fuel injection. A steam turbine load set-point is determined based on the provisional load set-point.

### DISCLOSURE OF INVENTION

It is the object of the present invention to provide a method of controlling a combined-cycle plant for the production of electric energy and a combined-cycle plant for the production of electric energy.

According to the present invention, a method of controlling a combined-cycle plant for the production of electric energy and a combined-cycle plant for the production of electric energy is disclosed as defined in claims 1 and 10, respectively.

### BRIEF DESCRIPTION OF THE DRAWINGS

The present invention will now be described with reference to the accompanying drawings, which show a non-limitative embodiment thereof, in which:
- figure 1 is a simplified block diagram of a combined-cycle plant for the production of electric energy according to an embodiment of the present invention;
- figure 2 is a more detailed block diagram of a portion of the plant in figure 1; and
- figure 3 is a chart showing magnitudes related to the plant in figure 1.

### BEST MODE FOR CARRYING OUT THE INVENTION

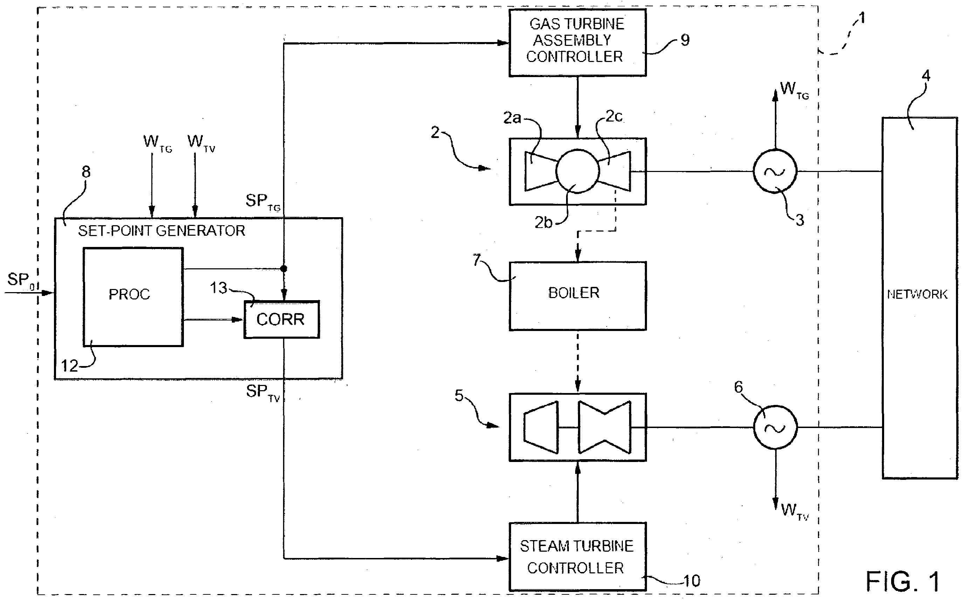

With reference to figure 1, a combined-cycle plant for production of electric energy of the 1+1 "multishaft" is identified as a whole by reference numeral 1 and comprises a gas turbine assembly 2, to which an alternator 3 is coupled, a steam turbine 5, an alternator 6, and a boiler 7. The gas turbine assembly 5 comprises a compressor 2a, a combustion chamber 2b and a gas turbine 2c. The boiler 7 receives a flow of hot exhaust gases from the gas turbine 2c and makes available a steam flow rate, which is supplied to the steam turbine 5. The alternators 3, 6 are connected to a distribution network 4.

The plant 1 additionally comprises a load set-point generation unit 8, a gas turbine assembly controller 9, coupled to the gas turbine assembly 2, and a steam turbine controller 10, coupled to the steam turbine 5.

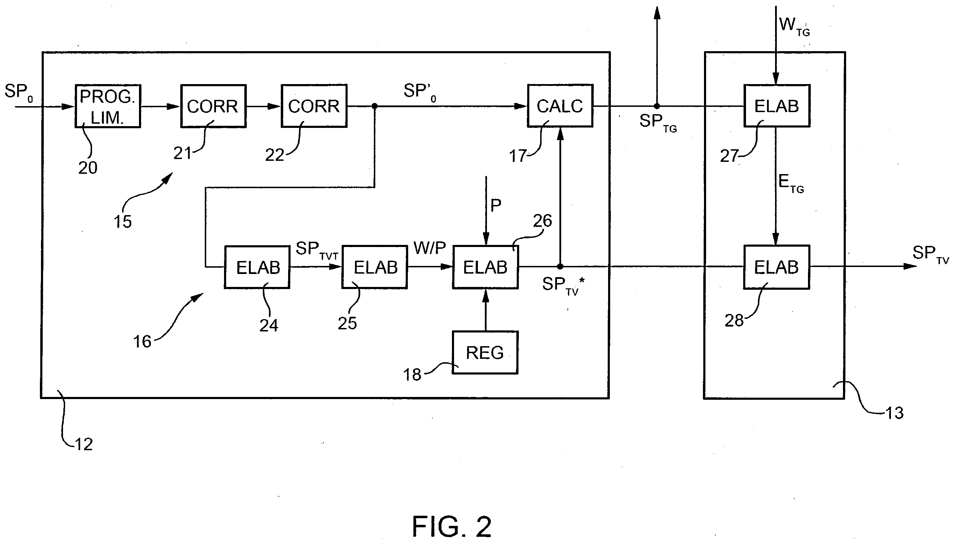

With reference to figures 1 and 2, the load set-point generation unit 8 receives a plant load set-point SP_{O} and distributes it to determine a gas turbine assembly load set-point SP_{TG} for the gas turbine assembly 2 and a steam turbine load set-point SP_{TV} for the steam turbine 5. The plant load set-point SP_{O} is supplied from the outside and may be set manually by an operator or automatically by a network manager (not shown), which distributes the load required by the devices connected to the network 4 across the available suppliers and/or as a function of the load plan developed by each producer on the basis of the energy market.

The gas turbine assembly load set-point SP_{TG} and the steam turbine load set-point SP_{TV} are supplied to the gas turbine assembly controller 9 and to the steam turbine controller 10, respectively. The gas turbine assembly controller 9 operates through respective actuators of a mobile inlet guide vane or IGV stage of the compressor 2a and on a fuel feeding valve of the combustion chamber 2b so that the active power W_{TG} delivered by the gas turbine assembly 2 and the alternator 3 follows the gas turbine assembly load set-point SP_{TG}. The steam turbine controller 10 works on a regulating valve system of the steam turbine 5 (in particular on inlet valves of a high pressure section) so that the active power W_{TV} delivered by the steam turbine 5 and the alternator 6 follows the steam turbine load set-point SP_{TV}. For the sake of simplicity, the actuators, the IGVs, the fuel feeding valve and the inlet valves are not shown in the accompanying figures.

Additionally, in order to implement the required control functions, the gas turbine assembly controller 9 and the steam turbine controller 10 receive a measure or an estimate of the active power W_{TG} available to the alternator 3 coupled to the gas turbine assembly 2 and a measure or estimate of the active power W_{TV} available to the alternator 6 coupled to the steam turbine 5, respectively.

In order to determine the distribution of the plant load set-point SP_{O} between gas turbine assembly 2 and steam turbine 5, the set-point generation unit 8 uses a processing stage 12 and a correction stage 13. The processing stage 12 determines the gas turbine assembly load set-point SP_{TG} and the provisional load set-point SP_{TV}^{*} from the plant load set-point SP_{O}. The provisional load set-point SP_{TV}^{*} is then modified by the correction stage 13 on the basis of a gas turbine load error E_{TG} to obtain the steam turbine load set-point SP_{TV}. The gas turbine load error E_{TG} is determined by the correction stage 13 (or, in a different embodiment, directly by the gas turbine assembly controller 9) and is defined by the difference between the active power W_{TG} and the gas turbine assembly load set-point SP_{TG}. In one embodiment, the correction stage 13 adds the gas turbine load error E_{TG} to the provisional load set-point SP_{TV}^{*}.

The set-point generation unit 8 is shown more in detail in figure 2.

The processing stage 12 comprises a first processing line 15, a second processing line 16, a calculation module 17 and a pressure regulator 18.

The first processing line 15 is configured to determine a gross plant load set-point SP_{O}', which is indicative of the overall power to be made available to the alternators 3, 6 of the gas turbine assembly 2 and the steam turbine 5, and comprises a programming and limiting module 20 and correction modules 21, 22. The programming and limiting module 20 applies limitations to the maximum and minimum plant load set-point SP_{O} and determines the maximum available load gradient. The correction modules 21, 22 apply respective additive contributions to the output of the programming and limiting module 20. More specifically, the correction module 21 adds a power contribution W_{AUX} corresponding to the power consumed by the auxiliary devices of the gas turbine assembly 2 and of the steam turbine 5, while the correction module 22 adds an regulation contribution W_{F} related to a difference between a current frequency of the network 4 and a rated network frequency. The gross plant load set-point SP_{O}' thus generated by the first processing line 15 takes into account the higher load, with respect to the plant load set-point SP_{O}, to be delivered in order to take the power consumed by the auxiliaries into account and the possible request to take part in primary grid frequency control of the network 4.

The second processing line 16, which comprises processing modules 24, 25, 26, receives the gross plant load set-point SP_{O}' and cooperates with the pressure regulator 18 to determine the provisional load set-point SP_{TV}^{*}.

In particular, the processing module 24 determines a theoretical load set-point SP_{TVT} for the gas turbine 5 as a function of the gross plant set-point SP₀', also taking the environmental temperature and pressure conditions into account.

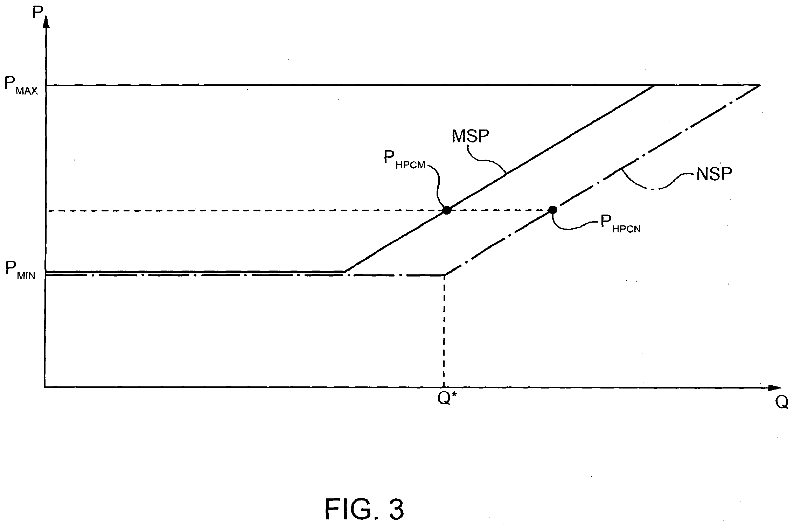

The processing module 25 uses the theoretical load set-point SP_{TVT} to determine a power-to-pressure ratio W/P functional to the required load for the steam turbine 5. In more detail, the processing module 25 carries out the following operations:
the theoretical load set-point SP_{TVT} is multiplied by a ratio Q_{HPR}/W_{R} between a rated high pressure flow rate Q_{HPR} and a rated load W_{H} of the steam turbine 5, to obtain a current high pressure flow rate Q_{HPC} corresponding to the theoretical load set-point SP_{TVT};
the current flow rate Q_{HPC} is multiplied by the P_{HPR}/Q_{R} ratio (also named machine constant) between a rated pressure P_{HPR} at the high pressure inlet valves and a rated high pressure flow rate Q_{HPR}, to obtain a current natural pressure set-point P_{HPCN} corresponding to the theoretical load set-point SP_{TVT} according to a natural sliding-pressure curve NSP (figure 3);
the current natural pressure set-point P_{HPCN} is corrected with a multiplying coefficient, to obtain a modified current pressure set-point P_{HPCM} corresponding to the theoretical load set-point SP_{TVT} in accordance with the modified sliding-pressure curve MSP (figure 3), so as to maintain a reserve which allows the steam turbine 5 to actively participate in primary grid frequency control;
the current modified pressure set-point P_{HPCM} is limited by a band defined between a maximum value P_{MAX} and a minimum pressure value P_{MIN}, if external to the band; and
determines the power-to-pressure ratio W/P by dividing the theoretical load set-point SP_{TVT} by the current modified pressure set-point P_{HPCM}.

The natural sliding-pressure curve NSP supplies the pressure set-points for the high pressure valves of the steam turbine 5 as a function of the high pressure steam flow rate assuming to maintain the high pressure valves themselves completely open above the Q* threshold flow rate (figure 3). The natural sliding-pressure curve NSP is thus a proper feature of the steam turbine 5.

The modified sliding-pressure curve MSP is obtained from the natural sliding-pressure curve NSP (e.g. for translation and/or rotation) and provides the pressure set-points for the high pressure valves of the steam turbine 5 as a function of the high pressure steam flow rate with the high pressure valves partially open also over the threshold flow rate Q*. In this manner, in steady-state conditions, the steam turbine 5 has a residual power margin which may be supplied to support the gas turbine assembly 2 during the load ramps or when the plant 1 is required to take part in the primary grid frequency control of the network 4.

Therefore, in practice, the current modified pressure set-point P_{HPCM}, possibly limited, is obtained with the inlet valves of the high pressure section only partially open. The possible further opening, to complete opening, allows to increase the load on the steam turbine 5 when needed, such as, for example, when the gas turbine assembly 2 cannot autonomously satisfy the overall load request.

The processing module 26 receives an actual pressure measurement P_{A} at the high pressure inlet valves from the steam turbine 5 and a power-to-pressure ratio W/P from the processing module 25, and multiplies them to determine the provisional load set-point SP_{TV}^{*}. The pressure regulator 18 contributes to determining the provisional load set-point SP_{TV}^{*}. More specifically, the pressure regulator 18 receives the actual pressure measurement P_{A} and a theoretical pressure set-point P_{T} determined in a manner similar to the set-point P_{HPCM}, using in this case the actually measured steam flow rate instead of the calculated steam flow rate Q_{HPR}. The pressure regulator 18 output supplies a corrective coefficient K_{P}. The corrective coefficient K_{P} is applied as multiplying term to take factors which could influence the power-to-pressure ratio W/P into account (such as, for example, the vacuum level variation in the steam turbine condenser or the opening of a breather or a bleeder on the steam pipes) and compensate for errors, e.g. in the calculation of the theoretical load set-point SP_{TVT}.

The calculation module 17 subtracts the provisional load set-point SP_{TV}^{*} supplied by the processing module 26 from the gross plant load set-point SP_{O}' to determine the gas turbine load set-point SP_{TG} for the gas turbine assembly 2. The gas turbine assembly load set-point SP_{TG} is supplied to the gas turbine assembly controller 9 and to the correction stage 13.

In one embodiment, the correction stage 13 comprises processing modules 27, 28. The processing module 27 uses the gas turbine assembly load set-point SP_{TG} and the measurement of the active power W_{TG} actually delivered by the gas turbine assembly 2 through the alternator 3, to determine the gas turbine load E_{TG} by difference.

The processing module 28 adds the gas turbine load error E_{TG} received from the processing module 27 to the provisional load set-point SP_{TV}^{*} to obtain the steam turbine load set-point SP_{TV}.

In one embodiment, the processing module 28 receives the gas turbine load error E_{TG} directly from the gas turbine assembly controller 9.

The steam turbine load set-point SP_{TV} thus determined is sent to the steam turbine 10, which acts on the high pressure inlet valves of the steam turbine 5 to maintain the power actually delivered by the steam turbine 5 itself through the alternator 6 in line with the steam turbine load set-point SP_{TV}. More specifically, the steam turbine controller 10 receives a measure of the active power W_{TV} actually delivered by the steam turbine 5 through the alternator 6, determines a steam turbine load error and works on the high pressure inlet valves of the steam turbine 5 so as to either cancel or maintain the steam turbine load set-point error.

In ordinary operating conditions, the gas turbine assembly 9 supplies the pertinent load portion defined by the gas turbine assembly load set-point SP_{TG}. The steam turbine load set-point SP_{TV} for the steam turbine 5 is moreover calculated starting from the current modified pressure set-point P_{HPCM} so that the steam turbine 5 has a residual power margin.

During transients which may occur, for example, when the plant 1 is started up or when the plant 1 is required to take part in primary grid frequency control of the network 4, the gas turbine assembly 9 may not be able to deliver sufficient power to satisfy with load request without delay. In case of high requests, for example, the limitations set on the load gradient may cause a delay in the response of the gas turbine assembly 2 and consequently the gas turbine load error E_{TG} will not be zero. The gas turbine load error E_{TG}, i.e. the portion of load that the gas turbine assembly 2 cannot recover, is added to the provisional load set-point SP_{TV}^{*} and thus assigned to the steam turbine 5, which still has a power margin to be delivered because the inlet valves are not completely open yet. The higher load contribution of the steam turbine 5 is not perceived by the gas turbine assembly 2 (indeed, it is not taken into consideration in the formation of the gas turbine assembly load set-point SP_{TG}), which continues to seek to supply the required contribution canceling the load error E_{TG}. The possible cancellation of the load error E_{TG} would make the high pressure inlet valve of the steam turbine 5 go back to the previous position.

The plant 1 is thus capable of a prompter, more effective response in the presence of high, sudden load requests throughout the deliverable power range. The steam turbine 5 in fact not only intervenes when the required load is higher than the maximum load of the gas turbine assembly 2, but also at lower load levels, when the maximum load gradient of the gas turbine assembly 2 in itself would not allow to effectively respond to the required variations of the network 4.

The set-point calculation mechanism for gas turbine assembly 2 and for the steam turbine 2 additionally promotes plant stability. Indeed, if the actual pressure measurement P_{A} accidentally increases, for example, due to an interference, the provisional load set-point SP_{TV}^{*} increases, making the steam use increase and the gas turbine assembly load set-point SP_{TG} decrease. As a consequence, pressure tends to decrease approaching the required value.

When the plant load set-point SP_{O} decreases, the use of the modified sliding-pressure curve for calculating the power-to-pressure ratio W/T and the provisional load set-point SP_{TV}^{*} allows to distribute the load request to the gas turbine assembly 2 and to the steam turbine 5 more uniformly than known plants. This has the effect of limiting the time for which the gas turbine works at loads lower than the minimum environmental load or the plant load program is accurately followed if a limitation lower than the load of the gas turbine assembly is provided.

It is finally apparent that changes and variations can be made to the described apparatus and method without departing from the scope of the present invention as disclosed in the appended claims.

In particular, the invention may be advantageously applied also to 2+1 "multishaft" combined-cycle plants in which two gas turbine assemblies and one steam turbine are present and the two gas turbine assemblies feed the same boiler for steam production. The load portion pertaining to the gas turbine assemblies is again determined by subtracting the provisional load set-point from the gross plant load set-point. The value thus obtained may be then distributed between the two gas turbine assemblies, for example in equal parts, if the gas turbine assemblies are substantially identical, or in a manner proportional to the rated power of the gas turbine assemblies.

## Claims

1. Method of controlling a combined-cycle plant for production of electric energy, wherein the plant (1) comprises at least a gas turbine assembly (2) and a steam turbine (5);
the method comprising:
receiving a plant load set-point (SP_{O});
determining a provisional load set-point (SP_{TV}^{*}) for the steam turbine (5) on the basis of the plant load set-point (SP_{O}) and of an actual pressure (P_{A}) of steam supplied to the steam turbine (5);
determining a gas turbine assembly load set-point (SP_{TG}), indicative of a first power (W_{TG}) to- be supplied through the gas turbine assembly (2), on the basis of the plant load set-point (SP_{O}) and of the provisional load set-point (SP_{TV}^{*});
using the gas turbine assembly load set-point (SP_{TG}) to control the gas turbine assembly (2);
determining a load error (E_{TG}) of the gas turbine assembly (2);
determining a steam turbine load set-point (SP_{TV}) indicative of a second power (W_{TV}) to be supplied through the steam turbine (5), on the basis of the provisional load set-point (SP_{TV}^{*}) and of the load error (E_{TG}) of the gas turbine assembly (2); and
using the steam turbine load set-point (SP_{TV}) to control the steam turbine (5).

2. Method according to claim 1, wherein the steam turbine load set-point (SP_{TV}) is determined in such a way that, in steady-state conditions, the steam turbine (5) has a residual power margin for delivery.

3. Method according to claim 1 or 2, wherein determining the steam turbine load set-point (SP_{TV}) comprises adding the provisional load set-point (SP_{TV}^{*}) and the load error (E_{TG}) of the gas turbine assembly (2).

4. Method according to claim 3, wherein determining the steam turbine load set-point (SP_{TV}) comprises:
determining a current natural pressure set-point (P_{HPCN}) corresponding to a theoretical portion of the plant load set-point (SP₀) pertaining to the steam turbine (5), in accordance with a natural sliding-pressure curve (NSP) of the steam turbine (5); and
determining a current modified pressure set-point (P_{HPCM}), on the basis of the current natural pressure set-point (P_{HPCN}) and in accordance with a modified sliding-pressure curve (MSP).

5. Method according to claim 4, wherein determining the steam turbine load set-point (SP_{TV}) comprises determining a power-to-pressure ratio (W/P) between a theoretical load set-point (SP_{TVT}), indicative of the theoretical portion of the plant load set-point (SP₀) pertaining to the steam turbine (5), and the current modified pressure set-point (P_{HPCM}).

6. Method according to claim 5, wherein determining the steam turbine load set-point (SP_{TV}) comprises multiplying the power-to-pressure ratio (W/P) by the actual pressure (P_{A}).

7. Method according to claim 5 or 6, wherein determining the steam turbine load set-point (SP_{TV}) comprises applying a corrective coefficient (K_{P}) determined by a pressure regulator (18) as a function of the actual pressure (P_{A}) and of a theoretical pressure set-point (P_{T}).

8. Method according to any one of the foregoing claims, wherein determining the gas turbine assembly load set-point (SP_{TG}) comprises subtracting the provisional load set-point (SP_{TV}^{*}) from the plant load set-point (SP₀).

9. Method according to any one of the foregoing claims, wherein the plant (1) is coupled to a distribution network (4) having a current network frequency and a rated network frequency; the method comprising determining a gross plant load set-point (SP₀') on the basis of the plant load set-point (SP_{O}), of a first power contribution (W_{AUX} indicative of a power consumption of auxiliary devices of the plant (1) and of a second power contribution (W_{F}) correlated to a difference between the current network frequency of the distribution network (4) and the rated network frequency.

10. Combined-cycle plant for production of electric energy comprising:
at least a gas turbine assembly (2);
a steam turbine (5);
a gas turbine assembly controller (9), coupled to the gas turbine assembly (2);
a steam turbine controller (10), coupled the steam turbine (5); and
a set-point generation unit (8) configured to:
receive a plant load set-point (SP_{O});
determine a provisional load set-point (SP_{TV}^{*}) for the steam turbine (5) on the basis of the plant load set-point (SP_{O}) and of an actual pressure (P_{A}) of steam supplied to the steam turbine (5);
determine a gas turbine assembly load set-point (SP_{TG}), indicative of a first power (W_{TG}) to be supplied through the gas turbine assembly (2), on the basis of the plant load set-point (SP_{O}) and of the provisional load set-point (SP_{TV}^{*});
supply the gas turbine assembly load set-point (SP_{TG}) to gas turbine assembly controller (9);
determine a steam turbine load set-point (SP_{TV}), indicative of a second power (W_{TV}) to be supplied through the steam turbine (5), on the basis of the provisional load set-point (SP_{TV}^{*}) and of a load error (E_{TG}) of the gas turbine assembly (2); and
supply the steam turbine load set-point (SP_{TV}) to the steam turbine controller (10).

11. Plant according to claim 10, wherein the set-point generation unit (8) is further configured to determine the steam turbine load set-point (SP_{TV}) in such a way that, in steady-state conditions, the steam turbine (5) has a residual power margin for delivery.

12. Plant according to claim 10 or 11, wherein the set-point generation unit (8) comprises:
a processing stage (12), configured to determine the gas turbine assembly load set-point (SP_{TG}) and the provisional load set-point (SP_{TV}^{*}) from the plant load set-point (SP₀); and
a correction stage (13), configured to determine the steam turbine load set-point (SP_{TV}) on the basis of a sum of the provisional load set-point (SP_{TV}^{*}) and of the load error (E_{TG}) of he gas turbine assembly (2).

13. Plant according to claim 12, wherein the processing stage (12) comprises:
a first processing module (24), configured to determine a theoretical portion of the plant load set-point (SP₀) pertaining to the steam turbine (5); and
a second processing module (25), configured to:
determine a current natural pressure set-point (P_{HPCN}) corresponding to the theoretical portion of the plant load set-point (SP₀) pertaining to the steam turbine (5), in accordance with a natural sliding-pressure curve (NSP) of the steam turbine (5);
determine a current modified pressure set-point (P_{HPCM}), on the basis of the current natural pressure set-point (P_{HPCN}) and in accordance with a modified sliding-pressure curve (MSP); and
determine a power-to-pressure ratio (W/P) between a theoretical load set-point (SP_{TVT}), indicative of the theoretical portion of the plant load set-point (SP₀) pertaining to the steam turbine (5), and the current modified pressure set-point (P_{HPCM}).

14. Plant according to claim 13, wherein the processing stage (12) comprises a third processing module (26), configured to multiply the power-to-pressure ratio (W/P) by the actual pressure (P_{A}).

15. Plant according to claim 14, wherein the processing stage (12) comprises a fourth processing module (17), configured to determine the gas turbine assembly load set-point (SP_{TG}) by subtracting the provisional load set-point (SP_{TV}^{*}) from the plant load set-point (SP₀).

## Patentansprüche

1. Verfahren zum Steuern eines Kombikraftwerks zur Erzeugung elektrischer Energie, wobei das Kraftwerk (1) mindestens eine Gasturbinenbaugruppe (2) und eine Dampfturbine (5) umfasst;
wobei das Verfahren umfasst:
Empfangen eines Kraftwerkauslastungseinstellwerts (SPo);
Bestimmen eines provisorischen Auslastungseinstellwerts (SP_{TV}^{*}) für die Dampfturbine (5) auf Grundlage des Kraftwerkauslastungseinstellwerts (SP₀) und eines tatsächlichen Drucks (P_{A}) von der Dampfturbine (5) zugeführtem Dampf;
Bestimmen eines Gasturbinenbaugruppenauslastungseinstellwerts (SP_{TG}), der eine durch die Gasturbinenbaugruppe (2) zu liefernde erste Leistung (W_{TG}) angibt, auf Grundlage des Kraftwerkauslastungseinstellwerts (SPo) und des provisorischen Auslastungseinstellwerts (SP_{TV}^{*});
Verwenden des Gasturbinenbaugruppenauslastungseinstellwerts (SP_{TG}), um die Gasturbinenbaugruppe (2) zu steuern;
Bestimmen eines Auslastungsfehlers (E_{TG}) der Gasturbinenbaugruppe (2);
Bestimmen eines Dampfturbinenauslastungseinstellwerts (SP_{TV}), der eine durch die Dampfturbine (5) zu liefernde zweite Leistung (W_{TV}) angibt, auf Grundlage des provisorischen Auslastungseinstellwerts (SP_{TV}^{*}) und des Auslastungsfehlers (E_{TG}) der Gasturbinenbaugruppe (2); und
Verwenden des Dampfturbinenauslastungseinstellwerts (SP_{TV}), um die Dampfturbine (5) zu steuern.

2. Verfahren nach Anspruch 1, wobei der Dampfturbinenauslastungseinstellwert (SP_{TV}) so bestimmt wird, dass unter stationären Bedingungen die Dampfturbine (5) eine übrige Lieferleistungsreserve hat.

3. Verfahren nach Anspruch 1 oder 2, wobei das Bestimmen des Dampfturbinenauslastungseinstellwerts (SP_{TV}) umfasst, den provisorischen Auslastungseinstellwert (SP_{TV}^{*}) und den Auslastungsfehler (E_{TG}) zu addieren.

4. Verfahren nach Anspruch 3, wobei das Bestimmen des Dampfturbinenauslastungseinstellwerts (SP_{TV}) umfasst:
Bestimmen eines aktuellen natürlichen Druckeinstellwerts (P_{HPCN}), der einem theoretischen Teil des die Dampfturbine (5) betreffenden Kraftwerkauslastungseinstellwerts (SPo) entspricht, in Übereinstimmung mit einer natürlichen Gleitdruckkurve (NSP) der Dampfturbine (5); und
Bestimmen eines aktuellen modifizierten Druckeinstellwerts (P_{HPCM}) auf Grundlage des aktuellen natürlichen Druckeinstellwerts (P_{HPCN}) und in Übereinstimmung mit einer modifizierten Gleitdruckkurve (MSP).

5. Verfahren nach Anspruch 4, wobei das Bestimmen des Dampfturbinenauslastungseinstellwerts (SP_{TV}) umfasst, ein Leistungs-zu-Druckverhältnis (W/P) zwischen einem theoretischen Auslastungseinstellwert (ST_{TVT}), der den theoretischen Teil des die Dampfturbine (5) betreffenden Kraftwerkauslastungseinstellwerts (SP₀) angibt, und dem aktuellen modifizierten Druckeinstellwert (P_{HPCM}) zu bestimmen.

6. Verfahren nach Anspruch 5, wobei das Bestimmen des Dampfturbinenauslastungseinstellwerts (SP_{TV}) umfasst, das Leistungs-zu-Druckverhältnis (W/P) mit dem tatsächlichen Druck (P_{A}) zu multiplizieren.

7. Verfahren nach Anspruch 5 oder 6, wobei das Bestimmen des Dampfturbinenauslastungseinstellwerts (SP_{TV}) umfasst, einen Korrekturkoeffizienten (K_{P}) anzuwenden, der durch einen Druckregler (18) als eine Funktion des tatsächlichen Drucks (P_{A}) und eines theoretischen Druckeinstellwerts (P_{T}) bestimmt wird.

8. Verfahren nach einem der vorhergehenden Ansprüche, wobei das Bestimmen des Gasturbinenbaugruppenauslastungseinstellwerts (SP_{TG}) umfasst, den provisorischen Auslastungseinstellwert (SP_{TV}^{*}) vom Kraftwerkauslastungseinstellwert (SPo) zu subtrahieren.

9. Verfahren nach einem der vorhergehenden Ansprüche, wobei das Kraftwerk (1) an ein Verteilungsnetz (4) mit einer aktuellen Netzfrequenz und einer Netz-Nennfrequenz angeschlossen ist; wobei das Verfahren umfasst, einen Bruttokraftwerksauslastungseinstellwert (SP₀') auf Grundlage des Kraftwerkauslastungseinstellwerts (SPo), eines ersten Leistungsbeitrags (W_{AUX}), der einen Energieverbrauch von Hilfsvorrichtungen des Kraftwerks (1) angibt, und eines zweiten Leistungsbeitrags (W_{F}) zu bestimmen, der in Korrelation zu einer Differenz zwischen der aktuellen Netzfrequenz des Verteilungsnetzes (4) und der Netz-Nennfrequenz steht.

10. Kombikraftwerk zur Erzeugung elektrischer Energie, Folgendes umfassend:
mindestens eine Gasturbinenbaugruppe (2);
eine Dampfturbine (5);
eine Gasturbinenbaugruppensteuerung (9), die an die Gasturbinenbaugruppe (2) angeschlossen ist;
eine Dampfturbinensteuerung (10), die an die Dampfturbine (5) angeschlossen ist; und
eine Einstellwertgenerierungseinheit (8), die konfiguriert ist zum:
Empfangen eines Kraftwerkauslastungseinstellwerts (SPo);
Bestimmen eines provisorischen Auslastungseinstellwerts (SP_{TV}^{*}) für die Dampfturbine (5) auf Grundlage des Kraftwerkauslastungseinstellwerts (SP₀) und eines tatsächlichen Drucks (P_{A}) von der Dampfturbine (5) zugeführtem Dampf;
Bestimmen eines Gasturbinenbaugruppenauslastungseinstellwerts (SP_{TG}), der eine durch die Gasturbinenbaugruppe (2) zu liefernde erste Leistung (W_{TG}) angibt, auf Grundlage des Kraftwerkauslastungseinstellwerts (SPo) und des provisorischen Auslastungseinstellwerts (SP_{TV}^{*});
Liefern des Gasturbinenbaugruppenauslastungseinstellwerts (SP_{TG}) an die Gasturbinenbaugruppensteuerung (9);
Bestimmen eines Dampfturbinenauslastungseinstellwerts (SP_{TV}), der eine durch die Dampfturbine (5) zu liefernde zweite Leistung (W_{TV}) angibt, auf Grundlage des provisorischen Auslastungseinstellwerts (SP_{TV}^{*}) und eines Auslastungsfehlers (E_{TG}) der Gasturbinenbaugruppe (2); und
Liefern des Dampfturbinenauslastungseinstellwerts (SP_{TV}) an die Dampfturbinensteuerung (10).

11. Kraftwerk nach Anspruch 10, wobei die Einstellwertgenerierungseinheit (8) darüber hinaus zum Bestimmen des Dampfturbinenauslastungseinstellwerts (SP_{TV}) konfiguriert ist, und zwar so, dass unter stationären Bedingungen die Dampfturbine (5) eine übrige Lieferleistungsreserve hat.

12. Kraftwerk nach Anspruch 10 oder 11, wobei die Einstellwertgenerierungseinheit (8) umfasst:
eine Verarbeitungsstufe (12), die zum Bestimmen des Gasturbinenbaugruppenauslastungseinstellwerts (SP_{TG}) und des provisorischen Auslastungseinstellwerts (SP_{TV}^{*}) aus dem Kraftwerkauslastungseinstellwert (SPo) konfiguriert ist; und
eine Korrekturstufe (13), die zum Bestimmen des Dampfturbinenauslastungseinstellwerts (SP_{TV}) auf Grundlage einer Summe aus dem provisorischen Auslastungseinstellwert (SP_{TV}^{*}) und dem Auslastungsfehler (E_{TG}) der Gasturbinenbaugruppe (2) konfiguriert ist.

13. Kraftwerk nach Anspruch 12, wobei die Verarbeitungsstufe (12) umfasst:
ein erstes Verarbeitungsmodul (24), das zum Bestimmen eines theoretischen Teils des die Dampfturbine 5 betreffenden Kraftwerkauslastungseinstellwerts (SP₀) konfiguriert ist; und
ein zweites Verarbeitungsmodul (25), das konfiguriert ist zum:
Bestimmen eines aktuellen natürlichen Druckeinstellwerts (P_{HPCN}), der dem theoretischen Teil des die Dampfturbine (5) betreffenden Kraftwerkauslastungseinstellwerts (SPo) entspricht, in Übereinstimmung mit einer natürlichen Gleitdruckkurve (NSP) der Dampfturbine (5); und
Bestimmen eines aktuellen modifizierten Druckeinstellwerts (P_{HPCM}) auf Grundlage des aktuellen natürlichen Druckeinstellwerts (P_{HPCN}) und in Übereinstimmung mit einer modifizierten Gleitdruckkurve (MSP); und
Bestimmen eines Leistungs-zu-Druckverhältnisses (W/P) zwischen einem theoretischen Auslastungseinstellwert (ST_{TVT}), der den theoretischen Teil des die Dampfturbine (5) betreffenden Kraftwerkauslastungseinstellwerts (SPo) angibt, und dem aktuellen modifizierten Druckeinstellwert (P_{HPCM}).

14. Kraftwerk nach Anspruch 13, wobei die Verarbeitungsstufe (12) ein drittes Verarbeitungsmodul (26) umfasst, das zum Multiplizieren des Leistungs-zu-Druckverhältnisses (W/P) mit dem tatsächlichen Druck (P_{A}) konfiguriert ist.

15. Kraftwerk nach Anspruch 14, wobei die Verarbeitungsstufe (12) ein viertes Verarbeitungsmodul (17) umfasst, das zum Bestimmen des Gasturbinenbaugruppenauslastungseinstellwerts (SP_{TG}) durch Subtrahieren des provisorischen Auslastungseinstellwerts (SP_{TV}^{*}) vom Kraftwerkauslastungseinstellwert (SPo) konfiguriert ist.

## Revendications

1. Procédé de commande d'une centrale à cycle mixte pour la production d'énergie électrique, dans lequel la centrale (1) comprend au moins un ensemble turbine à gaz (2) et une turbine à vapeur (5) ;
le procédé comprenant :
recevoir un point de consigne de charge de centrale (SP₀) ;
déterminer un point de consigne de charge provisoire (SP_{TV}^{*}) pour la turbine à vapeur (5) sur la base du point de consigne de charge de centrale (SP₀) et d'une pression effective (P_{A}) de la vapeur fournie à la turbine à vapeur (5) ;
déterminer un point de consigne de charge d'ensemble turbine à gaz (SP_{TG}), indicatif d'une première puissance (W_{TG}) à fournir par l'intermédiaire de l'ensemble turbine à gaz (2), sur la base du point de consigne de charge de centrale (SP₀) et du point de consigne de charge provisoire (SP_{TV}^{*}) ;
utiliser le point de consigne de charge d'ensemble turbine à gaz (SP_{TG}) pour commander l'ensemble turbine à gaz (2) ;
déterminer une erreur de charge (E_{TG}) de l'ensemble turbine à gaz (2) ;
déterminer un point de consigne de charge de turbine à vapeur (SP_{TV}), indicatif d'une seconde puissance (W_{TV}) à fournir par l'intermédiaire de la turbine à vapeur (5), sur la base du point de consigne de charge provisoire (SP_{TV}^{*}) et de l'erreur de charge (E_{TG}) de l'ensemble turbine à gaz (2) ; et
utiliser le point de consigne de charge de turbine à vapeur (SP_{TV}) pour commander la turbine à vapeur (5).

2. Procédé selon la revendication 1, dans lequel le point de consigne de charge de turbine à vapeur (SP_{TV}) est déterminé de telle manière que, dans des conditions en régime permanent, la turbine à vapeur (5) a une marge de puissance résiduelle vis-à-vis de la distribution.

3. Procédé selon la revendication 1 ou 2, dans lequel la détermination du point de consigne de charge de turbine à vapeur (SP_{TV}) comprend l'addition du point de consigne de charge provisoire (SP_{TV}^{*}) et de l'erreur de charge (E_{TG}) de l'ensemble turbine à gaz (2).

4. Procédé selon la revendication 3, dans lequel la détermination du point de consigne de charge de turbine à vapeur (SP_{TV}) comprend :
déterminer un point de consigne de pression naturelle actuelle (P_{HPCN}) correspondant à une portion théorique du point de consigne de charge de centrale (SP₀) appartenant à la turbine à vapeur (5), en conformité avec une courbe de pression glissante naturelle (NSP) de la turbine à vapeur (5) ; et
déterminer un point de consigne de pression modifiée actuelle (P_{HPCM}), sur la base du point de consigne de pression naturelle actuelle (P_{HPCN}) et en conformité avec une courbe de pression glissante modifiée (MSP).

5. Procédé selon la revendication 4, dans lequel la détermination du point de consigne de charge de turbine à vapeur (SP_{TV}) comprend la détermination d'un rapport puissance/pression (W/P) entre un point de consigne de charge théorique (SP_{TVT}), indicatif de la portion théorique du point de consigne de charge de centrale (SP₀) appartenant à la turbine à vapeur (5), et le point de consigne de pression modifiée actuelle (P_{HPCM}).

6. Procédé selon la revendication 5, dans lequel la détermination du point de consigne de charge de turbine à vapeur (SP_{TV}) comprend la multiplication du rapport puissance/pression (W/P) par la pression effective (P_{A}).

7. Procédé selon la revendication 5 ou 6, dans lequel la détermination du point de consigne de charge de turbine à vapeur (SP_{TV}) comprend l'application d'un coefficient correcteur (K_{P}) déterminé par un régulateur de pression (18) en fonction de la pression effective (P_{A}) et du point de consigne de pression théorique (P_{T}).

8. Procédé selon l'une quelconque des revendications précédentes, dans lequel la détermination du point de consigne de charge d'ensemble turbine à gaz (SP_{TG}) comprend la soustraction du point de consigne de charge provisoire (SP_{TV}^{*}) du point de consigne de charge de centrale (SP₀).

9. Procédé selon l'une quelconque des revendications précédentes, dans lequel la centrale (1) est couplée à un réseau de distribution (4) ayant une fréquence de réseau actuelle et une fréquence de réseau nominale ; le procédé comprenant la détermination d'un point de consigne de charge de centrale brut (SP₀') sur la base du point de consigne de charge de centrale (SP₀), d'une première contribution de puissance (W_{AUX}) indicative d'une consommation de puissance de dispositifs auxiliaires de la centrale (1) et d'une seconde contribution de puissance (W_{F}) corrélée à une différence entre la fréquence de réseau actuelle du réseau de distribution (4) et la fréquence de réseau nominale.

10. Centrale à cycle mixte pour la production d'énergie électrique comprenant :
au moins un ensemble turbine à gaz (2) ;
une turbine à vapeur (5) ;
une unité de commande d'ensemble de turbine à gaz (9), couplée à l'ensemble turbine à gaz (2) ;
une unité de commande de turbine à vapeur (10), couplée à la turbine à vapeur (5) ; et
une unité de génération de point de consigne (8) configurée pour :
recevoir un point de consigne de charge de centrale (SP₀) ;
déterminer un point de consigne de charge provisoire (SP_{TV}^{*}) pour la turbine à vapeur (5) sur la base du point de consigne de charge de centrale (SP₀) et d'une pression effective (P_{A}) de la vapeur fournie à la turbine à vapeur (5) ;
déterminer un point de consigne de charge d'ensemble turbine à gaz (SP_{TG}), indicatif d'une première puissance (W_{TG}) à fournir par l'intermédiaire de l'ensemble turbine à gaz (2), sur la base du point de consigne de charge de centrale (SP₀) et du point de consigne de charge provisoire (SP_{TV}^{*}) ;
fournir le point de consigne de charge d'ensemble turbine à gaz (SP_{TG}) à l'unité de commande d'ensemble turbine à gaz (9) ;
déterminer un point de consigne de charge de turbine à vapeur (SP_{TV}) indicatif d'une seconde puissance (W_{TV}) à fournir par l'intermédiaire de la turbine à vapeur (5), sur la base du point de consigne de charge provisoire (SP_{TV}^{*}) et d'une erreur de charge (E_{TG}) de l'ensemble turbine à gaz (2) ; et
fournir le point de consigne de charge de turbine à vapeur (SP_{TV}) à l'unité de commande de turbine à vapeur (10).

11. Centrale selon la revendication 10, dans laquelle l'unité de génération de point de consigne (8) est en outre configurée pour déterminer le point de consigne de charge de turbine à vapeur (SP_{TV}) de telle manière que, dans des conditions de régime permanent, la turbine à vapeur (5) a une marge de puissance résiduelle vis-à-vis de la distribution.

12. Centrale selon la revendication 10 ou 11, dans laquelle l'unité de génération de point de consigne (8) comprend :
un étage de traitement (12), configuré pour déterminer le point de consigne de charge d'ensemble turbine à gaz (SP_{TG}) et le point de consigne de charge provisoire (SP_{TV}^{*}) à partir du point de consigne de charge de centrale (SP₀) ; et
un étage de correction (13), configuré pour déterminer le point de consigne de charge de turbine à vapeur (SP_{TV}) sur la base d'une somme du point de consigne de charge provisoire (SP_{TV}^{*}) et de l'erreur de charge (E_{TG}) de l'ensemble turbine à gaz (2).

13. Centrale selon la revendication 12, dans laquelle l'étage de traitement (12) comprend :
un premier module de traitement (24), configuré pour déterminer une portion théorique du point de consigne de charge de centrale (SP₀) appartenant à la turbine à vapeur (5) ; et
un deuxième module de traitement (25), configuré pour :
déterminer un point de consigne de pression naturelle actuelle (P_{HPCN}) correspondant à la portion théorique du point de consigne de charge de centrale (SP₀) appartenant à la turbine à vapeur (5), en conformité avec une courbe de pression glissante naturelle (NSP) de la turbine à vapeur (5) ;
déterminer un point de consigne de pression modifiée actuelle (P_{HPCM}), sur la base du point de consigne de pression naturelle actuelle (P_{HPCN}) et en conformité avec une courbe de pression glissante modifiée (MSP) ; et
déterminer un rapport puissance/pression (W/P) entre un point de consigne de charge théorique (SP_{TVT}), indicatif de la portion théorique du point de consigne de charge de centrale (SP₀) appartenant à la turbine à vapeur (5), et le point de consigne de pression modifiée actuelle (P_{HPCM}).

14. Centrale selon la revendication 13, dans laquelle l'étage de traitement (12) comprend un troisième module de traitement (26), configuré pour multiplier le rapport puissance/pression (W/P) par la pression effective (P_{A}).

15. Centrale selon la revendication 14, dans laquelle l'étage de traitement (12) comprend un quatrième module de traitement (17), configuré pour déterminer le point de consigne de charge d'ensemble turbine à gaz (SP_{TG}) en soustrayant le point de consigne de charge provisoire (SP_{TV}^{*}) du point de consigne de charge de centrale (SP₀).
